Europäisches Patentamt

(19) European Patent Office

Office européen des brevets

(11) EP 0 570 267 B1

## (12) FASCICULE DE BREVET EUROPEEN

(45) Date de publication et mention de la délivrance du brevet:
**09.10.1996 Bulletin 1996/41**

(51) Int. Cl.[6]: **C01F 5/30**, B01J 27/138, C08F 4/02, C08F 110/06

(21) Numéro de dépôt: **93401188.3**

(22) Date de dépôt: **10.05.1993**

(54) **Procédé de fabrication de particules de chlorure de magnésium à structure polyèdre, particules de chlorure de magnésium à structure polyèdre, composante catalytique supportée sur ces particules, polyoléfines obtenues à partir de cette composante catalytique et particules de polypropylène se présentant sous la forme de cristaux maclés**

Verfahren zur Herstellung von Magnesiumchloridteilchen mit Polyederstruktur, Magnesiumchloridteilchen mit Polyederstruktur, katalytische Zusammenstellung auf diesen Teilchen aufgebracht, Polyolefin hergestellt mit dieser Zusammenstellung und Polypropylenteilchen mit Viellingstruktur

Process for the preparation of magnesium chloride particles with polyhedral shape, magnesium chloride particles with polyhedral shape, catalytic composition supported on these particles, polyolefins obtained using these catalytic compositions and polypropylene particles having a macled crystal particle structure

(84) Etats contractants désignés:
**AT BE DE ES FR GB IT NL PT SE**

(30) Priorité: **15.05.1992 FR 9205909**

(43) Date de publication de la demande:
**18.11.1993 Bulletin 1993/46**

(73) Titulaire: **ELF ATOCHEM S.A.**
**92800 Puteaux (FR)**

(72) Inventeurs:
- **Brun, Claude**
  **F-64320 Idron (FR)**
- **Brusson, Jean-Michel**
  **F-64320 Idron (FR)**
- **Duranel, Laurent**
  **F-64370 Arthez de Bearn (FR)**
- **Spitz, Roger**
  **F-69360 Saint Symphorien d'Ozon (FR)**

(56) Documents cités:
EP-A- 0 449 673  EP-A- 0 488 856
FR-A- 2 266 706

- JOURNAL OF APPLIED POLYMER SCIENCE vol. 40, 1990, pages 1303 - 1311 K. KANG ET AL. 'Effect of internal Lewis bases on recrystallised MgCl2-TiCl2 catalysts for polypropylene.'
- ANGEWANDTE MAKROMOLEKULARE CHEMIE vol. 120, 1984, pages 73 - 90 P. GALLI ET AL. 'High yield catalysts in olefin polymerization.'

**Description**

La présente invention concerne des particules de chlorure de magnésium, de préférence anhydre, (MgCl$_2$) de forme nouvelle ainsi que leur procédé de fabrication. Ces particules de MgCl$_2$ peuvent être utilisées comme support catalytique, en particulier dans les composantes de catalyseur du type Ziegler Natta. Ces composantes catalytiques sont utilisées dans la polymérisation des oléfines. Elles font également partie de l'invention.

Le document EP449673 décrit des particules poreuses de MgCl$_2$ se présentant, au microscope, sous la forme de sensiblement deux troncs de cône droit réunis par les plus grandes bases, incurvés, vers l'axe de symétrie perpendiculaire aux bases, à l'intersection de l'enveloppe des troncs de cône avec deux plans orthogonaux passant par ledit axe de symétrie. Les particules décrites dans ce document, imprégnées de composé de métal de transition, servent de composante catalytique dans la polymérisation des oléfines. Les polyoléfines obtenues et plus particulièrement le polyéthylène, le polypropylène et leurs copolymères sont constituées de particules de structure particulière.

Le MgCl$_2$ selon l'invention est constitué de particules poreuses se présentant, au microscope, sous la forme de polyèdres sensiblement réguliers possédant de 10 à 18 faces en nombre pair et se présentant dans une gamme de structures pouvant aller du type de deux pyramides tronquées réunies dans leur plus grande base jusqu'au prisme à pans coupés, les faces deux à deux symétriquement opposées étant sensiblement parallèles.

Les faces deux à deux symétriquement opposées d'un polyèdre étant sensiblement parallèles, lesdites faces peuvent être considérées de fait comme géométriquement sensiblement identiques.

La plus grande distance (D) opposant les deux points les plus éloignés l'un de l'autre de la particule est habituellement de 10 à 400 μm.

La plus grande hauteur (h) séparant les deux faces parallèles d'une particule les plus éloignées l'une de l'autre est habituellement comprise entre 0,6 et 0,8 D. La plus petite hauteur (e) séparant les deux faces parallèles de la même particule les plus rapprochées l'une de l'autre est habituellment comprise entre 0,1 et 0,8 D. Dans ces conditions, le rapport (h)/(e) est compris entre 1 et 8.

Les planches 3 et 4 en annexe schématisent ces particules de MgCl$_2$.

La majorité du MgCl$_2$ est constituée de particules formées d'un mélange de polyèdres possédant de 10 à 18 faces tels que définis.

Il n'est pas exclu que ces particules se présentent en partie sous forme de macle représentant l'association de deux ou plusieurs cristaux de même espèce, orientés suivant différents axes avec interpénétration partielle.

Les particules à base de MgCl$_2$ possèdent une faible porosité. Elle peut être de 0,1 à 1 cm$^3$/g et mieux de 0,2 à 0,8 cm$^3$/g. Leur surface spécifique est habituellement de 0,5 à 10 m$^2$/g et mieux de 1 à 3 m$^2$/g.

La taille moyenne des particules de MgCl$_2$ mesuré par MALVERN est généralement de 50 à 200 μm pour une distribution granulométrique resserrée. Habituellement la largeur de distribution granulométrique exprimée en $\frac{D90}{D10}$ est inférieure à 10 et plus généralement inférieure à 6, D 90 est le diamètre en-dessous duquel se trouvent 90 % en masse des particules et D10 est le diamètre en-dessous duquel se trouvent 10 % en masse des particules.

A l'examen aux rayons X le composé moléculaire à base de MgCl$_2$ est un produit cristallin.

En particulier, le spectre de rayons X de diffraction du composé MgCl$_2$, 1,5 THF (tétrahydrofurane) présente les principales raies de diffraction suivantes :

| Position en 2 $\theta$ | Intensité relative |
|---|---|
| 9,25 | 59,9 |
| 9,50 | 100,00 |
| 16,96 | 15,5 |
| 20,27 | 29,2 |
| 22,45 | 23,76 |
| 24,45 | 15,77 |
| 25,27 | 24,98 |
| 32,19 | 36,57 |
| 32,34 | 19,02 |
| 38,77 | 18,99 |
| 39,77 | 18,53 |

La largeur des pics à mi-hauteur, caractéristique de la taille des cristallites, est de 0,169 ± 0,006 pour la raie à 9,25 et 1,21 ± 0,003 pour la raie à 9,50.

Les mesures sont effectuées au moyen d'un appareil INEL CPS-160, sous une tension de 40 kv et une intensité de 35 mA, en utilisant la raie K$\alpha$ d'une anticathode de cuivre et une calibration au silicium. Le spectre INEL est indexé grâce au programme informatique PROLIX et affiné selon le profil PEARSON VII.

De par sa structure originale, le MgCl$_2$ obtenu présente les mêmes avantages qu'un MgCl$_2$ de forme sphérique tout en atténuant ses inconvénients. Afin d'obtenir une bonne coulabilité, mesurée selon la norme ASTM D1895, du MgCl$_2$, et plus particulièrement du polymère ou copolymère final, quand il est utilisé comme support catalytique, ont été recherchées des structures particulières du MgCl$_2$. La forme sphérique a été particulièrement recherchée dans le cas de la catalyse pour que la particule finale de polymère ou de copolymère, reproduisant sensiblement de façon homothétique la particule de support, possède cette qualité de coulabilité. L'inconvénient de cette sphéricité est de faciliter l'accumulation des charges électrostatiques dans les réacteurs et les canalisations occasionnant en particulier des collages de poudre aux parois. La structure du $MgCl_2$ selon l'invention permet d'atténuer ce type d'inconvénient.

Le procédé de fabrication de particules de chlorure de magnésium à structure polyèdrique selon l'invention consistant à mettre en suspension dans au moins un solvant complexant du chlorure de magnésium, le rapport molaire solvant sur $MgCl_2$ étant inférieur au rapport de solubilité de ces deux corps à la température de la suspension est caractérisé en ce que, en circuit fermé constitué d'un réacteur possédant un moyen d'agitation, d'une colonne de distillation, d'un moyen de refroidissement, est chauffé dans le réacteur le solvant complexant à température d'ébullition, les vapeurs condensées par le moyen de refroidissement retournant au réacteur après s'être enrichies en $MgCl_2$ par dissolution de $MgCl_2$ placé entre le moyen de refroidissement et le réacteur.

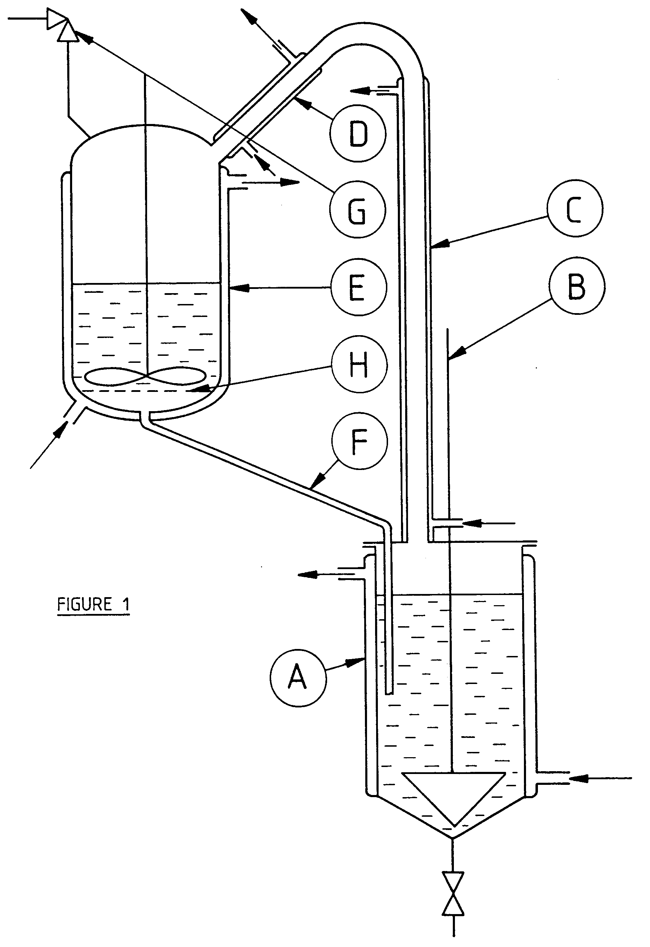

Un système selon la Figure 1 illustre l'appareillage permettant de réaliser le procédé. Le réacteur A, muni d'un agitateur B contient le solvant complexant, qui par tout moyen de chauffage est distillé dans la colonne C, et, condensé au moyen d'un réfrigérant D. Le solvant refroidi, avant de retourner au réacteur A par le tubulure F traverse le réservoir E contenant du $MgCl_2$ solide. Au contact du $MgCl_2$ le solvant s'enrichit en $MgCl_2$ qui va se concentrer dans le réacteur A, cristalliser sous forme de polyèdre dans le milieu sursaturé, et faire croître les cristaux déjà formés au fur et à mesure de l'apport de $MgCl_2$ dans le réacteur. Une soupape de sécurité G est recommandée dans l'appareillage. Le réservoir E de $MgCl_2$ doit seulement retenir le $MgCl_2$ solide servant à enrichir par sa dissolution dans le solvant la suspension contenue dans le réacteur A. Tous les moyens peuvent être envisageables. Ce peut être par exemple un récipient à fond poreux H, ou encore un panier à mailles suffisamment fines pour laisser passer la solution de $MgCl_2$ formée tout en retenant les particules de $MgCl_2$ non encore dissoutes, ou encore une nacelle type KUMAGAWA placée dans l'appareillage.

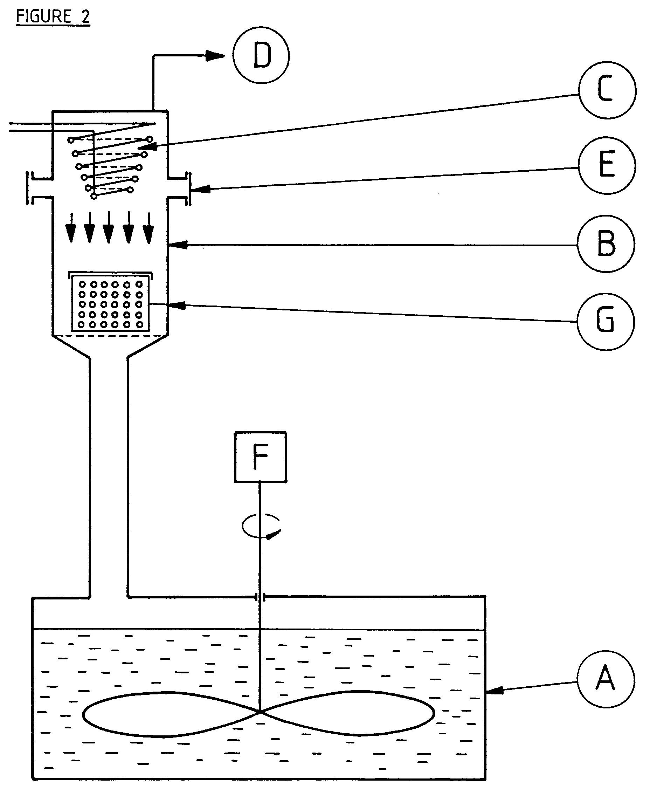

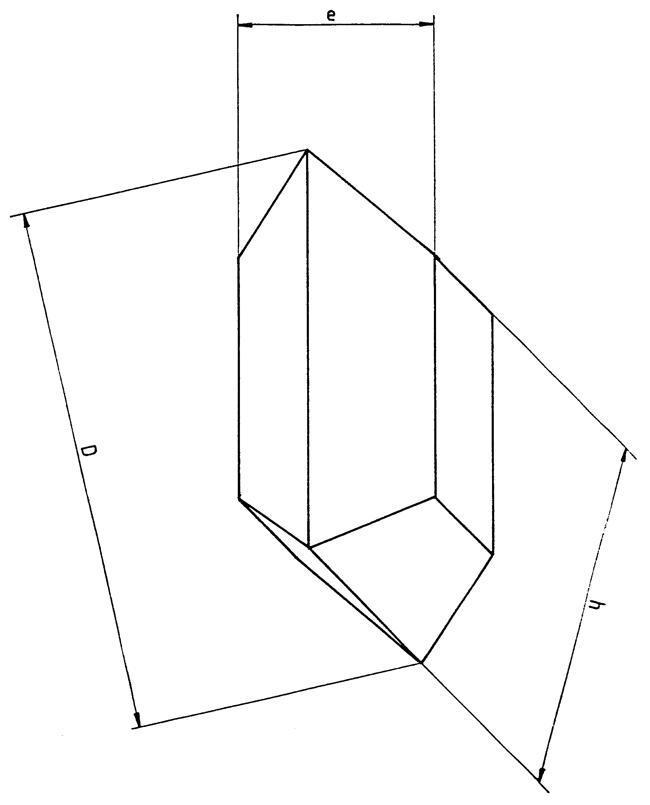

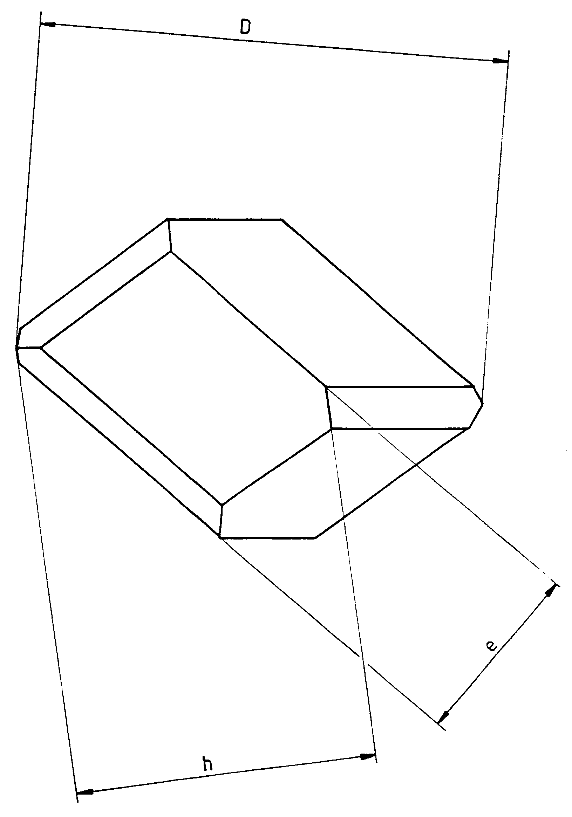

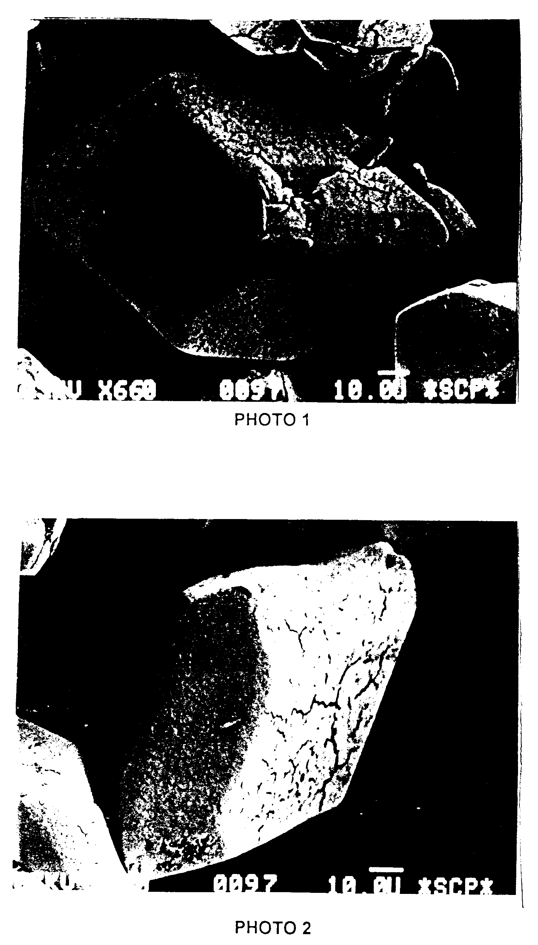

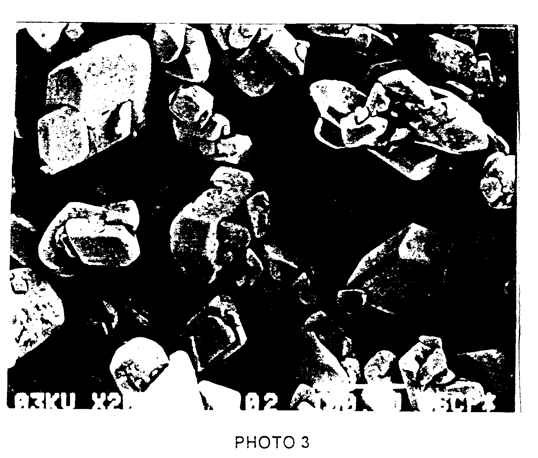

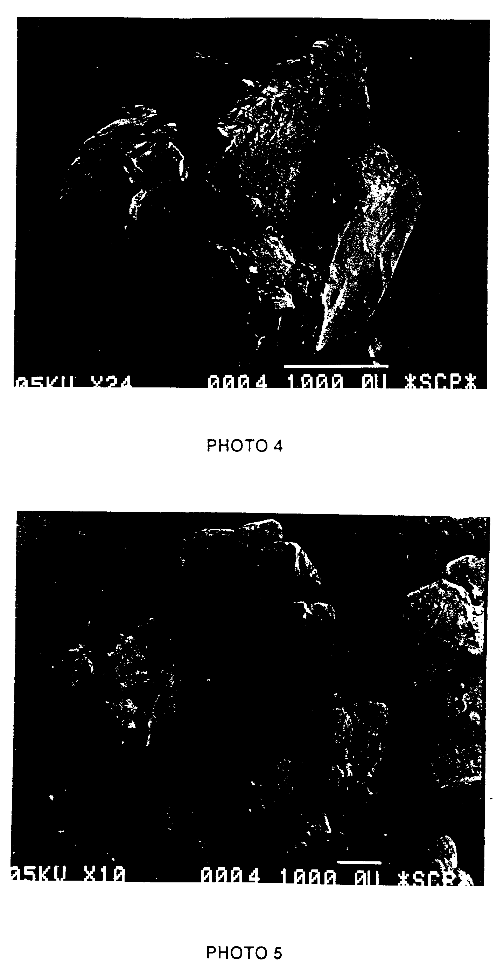

Un autre type d'appareillage selon la Figure 2 illustre également un système pour réaliser le procédé. Le réacteur A, muni d'un moyen d'agitation F est en contact direct avec une colonne B munie dans sa partie supérieure d'un moyen de refroidissement C. Entre ce moyen de refroidissement et le réacteur est placé une nacelle G contenant le $MgCl_2$ d'enrichissement. Un évent D est prévu et des systèmes E permettent de séparer chacun des éléments de l'appareillage pour montage et démontage.

Selon le procédé, il est possible de partir de solvant complexant seul dans le réacteur, que l'on enrichit régulièrement en $MgCl_2$, comme décrit précédemment, jusqu'à apparition dans le réacteur de particules de $MgCl_2$. En poursuivant l'enrichissement sement du milieu par distillation du solvant du réacteur et retour avec apport de $MgCl_2$ il est possible d'obtenir des particules de $MgCl_2$ sous forme de polyèdres dont (D) peut atteindre 400 μm et pouvant être illustrés sous forme de polyèdres tels que schématisés dans les planches 3 et 4.

Afin d'accélérer la manipulation il est recommandé de procéder à l'enrichissement et au grossissement des particules du réacteur en partant d'un fond de cuve de particules de $MgCl_2$ en suspension d'une précédente fabrication. Il est aussi possible de préparer dans une première étape les germes de $MgCl_2$ sous forme de polyèdre en mettant en suspension du $MgCl_2$ dans un de ses solvants complexant, le rapport molaire solvant sur $MgCl_2$ étant inférieur au rapport de solubilité de ces deux corps à la température de la suspension. Dans ces conditions du $MgCl_2$ doit rester en suspension dans le solvant complexant. Le milieu reste biphasique et contient suffisamment de solvant complexant pour maintenir du $MgCl_2$ en suspension. De façon recommandée, le $MgCl2$, de préférence anhydre ou de qualité commerciale à moins de 10 % d'eau, de structure quelconque, est mis en contact avec le solvant complexant, de préférence sous agitation. Le $MgCl_2$ est maintenu en suspension pendant un temps suffisant, de l'ordre de quelques heures, pour permettre le gonflement à coeur des particules par le solvant complexant. Afin d'obtenir les meilleurs résultats, il est recommandé d'opérer pendant la durée de mise en oeuvre de cette étape sensiblement à une température de (Teb -30° C) à (Teb +40° C), Teb étant la température d'ébullition du solvant complexant à la pression atmosphérique. Ce traitement permet le réarrangement des particules du $MgCl_2$ initial.

Les phénomènes les plus apparents qui se produisent au cours du réarrangement granulométrique sont la disparition des particules fines et la disparition des grosses particules de $MgCl_2$ initial avec l'apparition d'une forme particulière de particules tels que précédemment définies dont la distribution granulométrique est resserrée.

Après cette étape, sans changer la quantité de solvant initiale, on procède à la distillation du solvant en circuit fermé en présence, dans l'appareillage, du $MgCl_2$ d'enrichissement comme précédemment décrit. Ce $MgCl_2$ est également de préférence anhydre ou de qualité commerciale à moins de 10 % d'eau et de structure quelconque.

En procédant en deux étapes il semble plus facile de contrôler la régularité du grossissement des particules dans la deuxième étape.

Pour déterminer la taille moyenne finale souhaitée des particules il est possible d'utiliser la formule :

$$\text{grossissement} = \frac{D50\ \text{final}}{D50\ \text{initial}} = \left[\frac{m_1 + m_2}{m1}\right]^{1/3}$$

- $D_{50}$ étant le diamètre en dessous duquel se trouvent 50 % en masse des particules,

- le terme "initial" correspondant aux particules initialement en suspension quand le milieu se présente sous forme biphasique avant enrichissement,

$m_1$ = masse de $MgCl_2$ dans les particules présentes dans le milieu sursaturé initial,

$m_2$ = masse de $MgCl_2$ apportée par la distillation du solvant complexant pour l'enrichissement du milieu et le grossissement des particules.

Par solvant complexant on entend : tout composé chimique, basique au sens de Lewis, pouvant former avec le $MgCl_2$ un complexe de stoechiométrie définie et stable même en présence d'un excès de ce dit solvant, voire même dans le solvant pur.

Parmi les solvants particulièrement adaptés à la fabrication des particules de $MgCl_2$ tels que précédemment définies on choisit de préférence le tétrahydrofurane.

Une fois la taille finale souhaitée des particules obtenue, ces particules de $MgCl_2$ en suspension sont séparées du solvant saturé de $MgCl_2$, éventuellement lavées, par exemple par un hydrocarbure et éventuellement séchées thermiquement et/ou traitées sous vide ou par voie chimique pour éliminer en tout ou partie le solvant complexant

Le $MgCl_2$ récupéré se présente sous la forme de complexe $MgCl_2$, nX dans lequel X est le solvant du $MgCl_2$ qui lui est complexé. La valeur de "n" représentant le rapport molaire $X/MgCl_2$, peut évidemment être égale à zéro lorsque le solvant a été éliminé en totalité du $MgCl_2$. Habituellement cette valeur de "n" varie de 0 à 3. Par exemple dans le cas particulier où le tétrahydrofurane est utilisé comme solvant complexant la valeur de "n" recommandée est inférieure ou égale à 2,5 et après séchage du complexe inférieure ou égale à 1,5.

Ce $MgCl_2$ sous forme de complexe avec le solvant complexant peut être utilisé tel quel dans le cas où il sert de support de métal de transition pour les composantes de catalyseur du type Ziegler-Natta.

Pour la mise en suspension du $MgCl_2$, il est entendu par l'expression solvant complexant non seulement l'emploi d'un seul solvant complexant mais encore le mélange de plusieurs de ces composés. Il est possible d'ajouter au solvant complexant un composé miscible, inerte vis à vis du solvant complexant, tel qu'un hydrocarbure contenant de 6 à 30 atomes de carbone qui peut être choisi parmi les hydrocarbures linéaires ou cycliques, saturés ou insaturés, comme l'heptane, le cyclohexane, le toluène, le benzène ou leurs dérivés comme le durène ou le xylène ou encore parmi les composés comportant un ou plusieurs hétéroatomes comme les éthers, les esters, les amines, les silanes.

Il est également possible d'associer dans le réacteur au solvant complexant des polymères ou copolymères d'alpha oléfines possédant de 2 à 8 atomes de carbone, ou styréniques de masses moléculaires en nombre Mn de 1 000 à 20 000, ou encore des huiles siliconées de Mn 500 à 10000 solubles dans le solvant complexant ou encore des résines vinyliques. Ces composés peuvent être associés au solvant complexant dans des proportions de 1 à 25 % en poids du $MgCl_2$ total mis en oeuvre.

Une composante catalytique de catalyseur du type Ziegler-Natta peut être obtenue essentiellement par combinaison du $MgCl_2$ selon l'invention avec un composé de métal de transition. C'est ainsi qu'une telle composante peut être obtenue par dépôt sur le $MgCl_2$ d'un composé du titane, du vanadium, du zirconium et/ou d'hafnium, de préférence halogéné et plus particulièrement du $TiCl_4$, $TiCl_3$, du $TiCl_n(OR)_{4-n}$ avec $0 \leq n \leq 3$ et R représentant un radical hydrocarboné saturé de 1 à 12 carbones, du $VCl_3$, $VCl_4$ ou $VOCl_3$, $HfCl_4$, ou $ZrCl_4$. Cette composante catalytique associée à un cocatalyseur choisi parmi les composés organométalliques des métaux I à III du tableau périodique et plus particulièrement les composés d'aluminium, sert de catalyseur de polymérisation ou copolymérisation des oléfines linéaires ou ramifiées comme l'éthylène, le propylène, le butène-1, l'hexène-1, l'octène-1, le 4-méthylpentène-1, le butadiène-1-3, le 1-9 décadiène.

Au moins un donneur d'électrons peut être ajouté à la composante catalytique lors de sa fabrication et/ou au cocatalyseur. Ce donneur d'électrons peut être par exemple choisi parmi les bases de Lewis, les esters et polyesters d'acides oxygénés, les éthers et polyéthers, les amines, les composés du silicium tels que les silanes et les alkylalkoxysilanes de formule $SiR_1R_2(OR)_2$, $SiR_1(OR)_3$ ou $SiR_1R_2R_3(OR)$, les différents R étant des radicaux hydrocarbonés de 1 à 12 carbones, ainsi que les composés du phosphore tels que les phosphates et les phosphonates, les préférés étant les esters ou polyesters alcoylés d'acide aromatique, les mono ou diéthers d'alcoyle, les alkoxysilanes, les alkylalkoxysilanes et les acides de Lewis. En plus ou à la place du donneur d'électrons, le support peut être traité par un acide de Lewis choisi parmi les composés organoaluminiques tels que ceux décrits comme cocatalyseurs.

Le catalyseur obtenu à partir d'une composante fabriquée à partir du $MgCl_2$ de l'invention convient à tous les types de polymérisation des oléfines : en haute et basse pression, en suspension, en phase gazeuse ou en masse.

La composante catalytique peut avantageusement être préparée par imprégnation, de façon connue, des particules de $MgCl_2$ précédemment décrites, par un composé de métal de transition liquide ou en solution comportant un ou plusieurs atomes d'halogène et particulièrement du chlore. Préalablement à cette imprégnation ou en même temps, il peut être recommandé de procéder au dépôt d'au moins un des donneurs d'électrons déjà cités.

La composante catalytique obtenue, associée à un cocatalyseur classique, habituellement choisi parmi les composés organoaluminiques tels que les aluminoxanes, les aluminosiloxanes, les composés comportant des liaisons Al-R-Al ou R représente un groupement alcoyle, ou, de formule $AlX_qR'_s$ dans laquelle X repré-

sente Cl ou OR' avec R' désignant un radical alcoyle en $C_1$ à $C_{16}$ et de préférence $C_1$ à $C_{12}$ tandis que q et s sont des nombres tels que $1 \leq s \leq 3$, $0 \leq q \leq 2$ avec $q + s = 3$, forme un catalyseur adapté à la polymérisation des oléfines et plus particulièrement de l'éthylène, du propylène, du butène-1, du 4-méthyle pentène-1 et de l'hexène-1,de l'octène, du butadiène-1-3, ou, de leurs mélanges. Au cocatalyseur, il n'est pas exclu d'associer au moins un donneur d'électrons tel que défini précédemment. La composante catalytique et le cocatalyseur sont associés dans des proportions telles que le rapport molaire d'aluminium contenu dans le cocatalyseur au métal de transition de ladite composante se situe entre 0,5 et 2000 et de préférence entre 1 à 1000.

La polymérisation des oléfines précitées et en général des oléfines en $C_2$ à $C_{12}$ prises seules ou en mélanges, au moyen du système catalytique défini précédemment peut être mise en oeuvre, en solution ou en suspension dans un milieu liquide inerte et notamment dans un hydrocarbure aliphatique tel que le n-heptane, le n-hexane, l'isohexane, l'isobutane, ou encore en masse dans l'une au moins des oléfines à polymériser maintenue à l'état liquide ou hypercritique.

Les conditions opératoires, notamment températures, pressions, quantité de système catalytique, pour ces polymérisations en phase liquide sont celles qui sont habituellement proposées pour des cas similaires faisant appel à des systèmes catalytiques conventionnels de type Ziegler Natta supporté ou non.

Par exemple pour une polymérisation conduite en suspension ou en solution dans un milieu liquide inerte, on peut opérer à des températures allant jusqu'à 250°C et sous des pressions allant de la pression atmosphérique à 250 bars. Dans le cas d'une polymérisation en milieu propylène liquide, les températures peuvent aller jusqu'à la température critique et les pressions peuvent être comprises entre la pression atmosphérique et la pression critique. Pour une polymérisation ou copolymérisation de l'éthylène en masse conduisant à des polyéthylènes ou à des copolymères majoritaires en éthylène, on peut opérer à des températures comprises entre 130°C et 350°C et sous des pressions allant de 200 à 3500 bars.

Le système catalytique obtenu par association de la composante de métal de transition suivant l'invention avec un cocatalyseur et éventuellement un donneur d'électrons tels que définis plus haut, peut être encore utilisé pour la polymérisation en phase gazeuse des oléfines ou des mélanges d'oléfines, qui viennent d'être cités. En particulier on peut polymériser en phase gazeuse, au contact dudit système catalytique, un mélange d'éthylène ou de propylène et d'une ou plusieurs oléfines en $C_2$ à $C_{12}$ telles que éthylène, propylène, butène-1, hexène-1, méthyl-4 pentène-1 et octène-1, renfermant, lorsqu'il est au contact du système catalytique, une proportion molaire de comonomères en $C_2$ à $C_{12}$ comprise entre 0,1 et 90 %, et de préférence entre 1 et 60 %.

La polymérisation en phase gazeuse de l'oléfine ou des oléfines au contact du système catalytique peut être effectuée dans tout réacteur permettant une polymérisation en phase gazeuse et en particulier dans un réacteur à lit agité et/ou à lit fluidisé. Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou copolymère à synthétiser, et plus particulièrement comprise entre +20°C et (Tf -5)°C, et sous une pression telle que l'oléfine ou les oléfines, et éventuellement les autres monomères hydrocarbonés présents dans le réacteur soient essentiellement en phase vapeur.

La polymérisation en solution, en suspension, en masse, ou en phase gazeuse peut être réalisée en présence d'un agent de transfert de chaînes, de manière à contrôler l'indice de fusion du polymère ou copolymère à produire. L'agent de transfert de chaînes préféré est l'hydrogène, que l'on utilise en quantité pouvant aller jusqu'à 90 %, et se situant de préférence entre 0,1 et 60 % du volume de l'ensemble oléfines et hydrogène amené au réacteur.

La composante de métal de transition suivant l'invention peut également être utilisée pour la préparation d'un prépolymère actif, qui est utilisable seul ou en association avec un cocatalyseur choisi parmi les composés d'aluminium définis précédemment.

Ledit prépolymère actif est obtenu en mettant en contact une ou plusieurs alpha-oléfines en $C_2$ à $C_{12}$ éventuellement en présence d'hydrogène avec un système catalytique formé en associant la composante de métal de transition suivant l'invention avec un cocatalyseur choisi parmi les composés cités plus haut dans ce but et employés dans les proportions indiquées précédemment, ladite oléfine ou lesdites oléfines en $C_2$ à $C_{12}$ étant utilisées en quantité représentant 2 à 500 grammes et de préférence 2 à 100 grammes de l'oléfine ou des oléfines en $C_2$ à $C_{12}$ par gramme de la composante de métal de transition.

La composante catalytique selon l'invention est particulièrement intéressante dans la polymérisation ou la copolymérisation de l'éthylène ou du propylène ou de leurs mélanges entre eux ou avec une autre oléfine en ce qu'elle permet d'obtenir des polymères ou des copolymères de distribution granulométrique étroite avec absence de fines particules, de bonne coulabilité et d'indice de fusion adapté aux applications habituelles.

Les polyoléfines ou les copolymères d'oléfines obtenus sont constitués de particules dont la taille moyenne est généralement comprise de 500 à 7000 $\mu$m et plus particulièrement de 1000 à 5000 $\mu$m. Habituellement la largeur de distribution granulométrique $\frac{D90}{D10}$ des poudres est inférieure à 15 et plus généralement inférieure à 10, leur masse volumique apparente (mva), mesurée selon la norme ASTM D1895-méthode A, étant généralement comprise entre 0,2 et 0,5 g/cm$^3$ et mieux entre 0,25 et 0,5 g/cm$^3$. La coulabilité des poudres est élevée avec des valeurs habituellement inférieures ou égales à 20 secondes selon la norme ASTM-D1895. Leur surface spécifique est généralement de 0,1 à 20 m$^2$/g. Leur porosité est comprise entre 0,1 et 1 cm$^3$/g.

Dans le cas de la polymérisation du propylène, les particules de polypropylène présentent généralement une forme sensiblement homothétique de celle des particules de composante catalytique. Ainsi, au moins 90 % en poids des particules de polypropylène présentent généralement l'apparence de cristaux maclés. Comme indiqué précédemment, cette forme présente l'avantage par rapport à la sphéricité, de réduire l'accumulation des charges électrostatiques dans les réacteurs et les canalisations. Dans des conditions industrielles de polymérisation, au moins 99 % en poids des particules de polypropylène présentent une taille supérieure à 500 μm.

Les photos annexées illustrent les différents aspects de l'invention.

La photo 1 illustre au grossissement 660 une particule de MgCl$_2$ sous forme de polyèdre à douze faces.

La photo 2 illustre au grossissement 720 une particule de MgCl$_2$ sous forme de polyèdre à dix faces.

La photo 3 illustre au grossissement 200 un ensemble de particules de MgCl$_2$.

La photo 4 illustre au grossissement 24 une particule de polypropylène sous forme de cristaux maclés.

La photo 5 illustre au grossissement 10 un ensemble de particules de polypropylène.

La mesure du diamètre moyen des particules et de la largeur de la distribution granulométrique $\frac{D90}{D10}$ est effectuée au moyen d'un granulomètre à laser MALVERN 1600. La surface spécifique est mesurée par l'adsorption physique isotherme d'azote à la température de l'azote liquide, méthode BET, sur un appareil QUANTASORB. Le volume poreux est déterminé par intrusion de mercure sous pression avec un porosimètre ERBASCIENCE 1500. Les mesures sont effectuées après traitement sous vide des échantillons pendant 2 heures à la température ambiante.

Les exemples suivants illustrent l'invention sans toutefois la limiter.

Exemple 1.

Dans un premier réacteur de 2 l. muni d'une double enveloppe pour réguler la température et d'un système d'agitation, on introduit respectivement sous atmosphère d'azote : 84 g de MgCl$_2$ anhydre commercial, contenant moins de 0,3 % d'eau et 1,6 litre de tetrahydrofurane (THF). On ajuste la température à 60° C, l'agitation est portée à 100 t/mn. Le réacteur est maintenu sous 2 bars d'azote. Après 16 heures de réaction on obtient une suspension de particules.

Après décompression, la suspension obtenue dans le réacteur précédent est portée à ébullition et les vapeurs de THF produites sont recondensées dans un second réacteur de deux litres, à double enveloppe, agité à 130 t/mn et à sole filtrante, purgé à l'azote, contenant 150 g de MgCl$_2$ anhydre commercial et maintenu à 60° C (voir figure 1). Le soluté formé de ce second réacteur est récupéré sous la sole filtrante et renvoyé dans la suspension du premier réacteur.

Le procédé fonctionne en boucle fermée jusqu'à épuisement du MgCl$_2$ présent dans le second réacteur.

Au bout de 7 heures on baisse la température à 60° C, on filtre la suspension, puis on lave le gâteau quatre fois avec 1,6 litre d'hexane. Apres la dernière filtration, on sèche à 75° C par entraînement à l'azote. On recueille sous azote 300 g d'une poudre blanche solide de bonne coulabilité ayant les caractéristiques suivantes :

- composition molaire MgCl$_2$ 1,5 THF,
- mva = 0,65 g/cm$^3$ (masse volumique apparente),
- taille granulométrique moyenne 110 microns,
- D90/D10 = 3,5

L'examen sous microscope électronique à balayage montre des particules polyédriques constituées majoritairement de bipyramides tronquées et reliées entre elles par la plus grande des bases et de prismes à pans coupés.

Exemple 2.

On reprend le montage selon la Figure 1. On charge le premier réacteur avec 1,6 litre de THF qui est porté à ébullition sous agitation. Les vapeurs de THF produites sont recondensées dans le second réacteur de deux litres, agité à 130 t/mn, contenant 234 g de MgCl$_2$ anhydre commercial et maintenu à 60° C. Le soluté formé dans le second réacteur est récupéré sous la sole filtrante et renvoyé dans le premier réacteur. Le procédé fonctionne en boucle fermée jusqu'à épuisement du MgCl2 présent dans le second réacteur.

Au bout de 7 heures, on baisse la température à 60° C, on filtre la suspension, puis on lave le gâteau 4 fois avec 1,6 litre d'hexane. Après la dernière filtration on sèche à 75° C par entraînement à l'azote. On recueille sous azote 310 g d'une poudre blanche de bonne coulabilité ayant les caractéristiques suivantes :

- composition molaire MgCl$_2$ 1,5 THF,
- mva = 0,63 g/cm$^3$,
- taille granulométrique moyenne 100 microns,
- D90/D10 = 3

L'examen sous microscope électronique à balayage montre une morphologie identique à celle de l'exemple 1.

Exemple 3.

On opère selon l'exemple 1 sauf que l'on introduit avec les 84 g de MgCl$_2$ 10,5 g de 1, 2, 4, 5-tétraméthylbenzène. On recueille en fin de séchage sous N2 305 g d'une poudre blanche ayant les caractéristiques suivantes :

-     taille granulométrique moyenne de 107 microns,
-     D90/D10 = 3,5

La morphologie observée en 1 est conservée.

Exemple 4.

On opère selon l'exemple 1 sauf que l'on introduit après addition des 84 g de MgCl$_2$, 10,5 g de toluène. On recueille en fin de séchage sous N2 302 g d'une poudre blanche ayant les caractéristiques suivantes :

-     taille granulométrique moyenne = 158 microns,
-     D90/D10 = 3,3.

La morphologie des particules observées en 1 est conservée.

Exemple 5.

On opère selon l'exemple 1 sauf que l'on introduit après addition de 84 g de MgCl$_2$ 10,5 g de polychlorure de vinyle ayant une valeur K = 67. On recueille en fin de séchage sous N2 295 g d'une poudre blanche ayant les caractéristiques suivantes :

-     taille granulométrique moyenne = 125 microns,
-     D90/D10 = 3,3.

La morphologie des particules observée en 1 est conservée.

Exemple 6.

On opère selon l'exemple 1 sauf que l'on introduit après addition des 84 g de MgCl$_2$, 10,5 de polystyrène (MI. = 2,5). On recueille en fin de séchage 321 g d'une poudre blanche ayant les caractéristiques suivantes :

-     taille granulométrique moyenne = 130 microns,
-     D90/D10 = 3,8.

La morphologie des particules observée en 1 est conservée.

Exemple 7.

On opère selon l'exemple 1 sauf que l'on introduit après addition des 84 g de MgCl$_2$, 10,5 g de polyéthylène (MI2 = 70). On recueille en fin de séchage 334 g d'une poudre blanche ayant les caractéristiques suivantes :

-     taille granulométrique moyenne = 106 microns,
-     D90/D10 = 4,6

La morphologie des particules observée en 1 est conservée.

Exemple 8

On opère selon l'exemple 1 sauf que l'on introduit lo après addition des 84 g de MgCl$_2$ 10,5 g de polymethylhydrosiloxane. On recueille en fin de séchage 365 g d'une poudre blanche ayant les caractéristiques suivantes :

-     taille granulométrique moyenne = 95 microns,
-     D90/D10 = 4.

La morphologie des particules observée en 1 est conservée.

Exemple 9.

Dans le réacteur A de 0,5 l de l'appareillage de la figure 2, maintenu à 60° C on introduit sous agitation et sous atmosphère d'azote : 6 g de MgCl$_2$ commercial et 0,12 l de THF. L'agitation est maintenue à 60 t/mn pendant 16 h. On obtient une suspension de particules. Toujours sous atmosphère d'azote, on charge la nacelle G avec 12 g de MgCl$_2$ commercial. On porte à ébullition le THF du réacteur A. Les vapeurs de THF produites se condensent au niveau du réfrigérant et retombent dans la nacelle renfermant MgCl$_2$. Un soluté y est formé qui retombe dans le réacteur.

Le procédé fonctionne jusqu'à épuisement du MgCl$_2$ dans la nacelle. Au bout de 10 heures on baisse la température, on filtre la suspension, puis on lave le gâteau quatre fois avec 0,12 litre d'hexane. Après la dernière filtration on sèche à 75° C par entraînement à l'azote. On recueille sous azote 25 g d'une poudre blanche de bonne coulabilité ayant les caractéristiques suivantes :

-     composition molaire MgCl$_2$ 1,5 THF,
-     mva = 0,63 g/cm$^3$,
-     taille granulométrique moyenne = 125 microns,
-     D90/D10 = 4.

L'examen au microscope électronique à balayage montre la même morphologie que dans l'exemple 1.

Exemple 10.

Dans un réacteur purgé à l'azote de 0,3 litre, muni d'une double enveloppe, d'une sole filtrante et d'une agitation tournant à 180 t/mn on introduit à 20° C : 14,9 g de MgCl$_2$ traité selon l'exemple 1, 145 cc de TiCl$_4$ pur, 2,3 cc de dibutylphtalate, 48 cc de toluène. Le milieu est agité à 90° C durant deux heures puis on filtre. On effectue cinq lavages d'une heure avec 195 cc d'un mélange 5/95 volumique de TiCl$_4$/toluène à 100° C, puis trois lavages de 15 mn avec 150 cc d'hexane à 60°C. Après la dernière filtration, on sèche par entraînement sous N2 à 60° C. On recueille une composante catalytique de bonne coulabilité contenant : Ti = 3,2 %, Mg = 18,9 %, Cl = 62,3 %. La taille moyenne des particules est de 62 microns.

## Exemple 11.

Dans un réacteur de 1,5 l en acier inoxydable, muni d'une agitation à ancre avec entraînement magnétique tournant à 400 t/mn et d'une régulation thermique par double enveloppe on introduit à 40° C sous courant d'azote, 1 litre d'hexane, 6 m M de triisobutylaluminium, 20 mg de composante catalytique obtenue selon l'exemple 10.

On élève la pression d'azote à 2 bars absolus et l'on règle la température à 80° C. On ajuste à l'équilibre de température la pression à 3 bars absolus par apport d'azote. On ajoute 4 bars d'hydrogène et 6 bars d'éthylène. La pression est maintenue constante à 13 bars absolus par apport d'éthylène. Au bout de 120 minutes de réaction, on abaisse la température à 30° C et on décomprime le réacteur à pression atmosphérique. On récupère 388 g de polymère après filtration et séchage. La productivité est de 19 400 gPE/g catalyseur et le diamètre moyen de la poudre est de 1176 microns pour un ratio d90/d10 = 3,3 et une masse volumique apparente de 0,3. Les indices de fusion à 190° C sous charge de 2,16 kg et 5 kg sont respectivement 2,07 et 6,18.

## Exemple 12.

On opère selon l'exemple 10 sauf que l'on indroduit 14,9 g de $MgCl_2$ traité suivant l'exemple 3. En fin de traitement, on recueille une composante catalytique de bonne coulabilité contenant: Ti = 2 %, Mg = 20 %. La taille moyenne des particules est de 73 $\mu$m.

## Exemple 13.

On opère selon l'exemple 10 sauf que l'on introduit 14,9 g de $MgCl_2$ traité suivant l'exemple 2. En fin de traitement, on recueille une composante catalytique de bonne coulabilité contenant : Ti = 2,2 %, Mg = 17,2 %. La taille moyenne des particules est de 80 $\mu$m.

## Exemple 14.

On opère selon l'exemple 10 sauf que l'on introduit 14,9 g de $MgCl_2$ traité suivant l'exemple 6. En fin de traitement, on recueille une composante catalytique de bonne coulabilité contenant : Ti = 2 %, Mg = 17 %. La taille moyenne des particules est de 74 $\mu$m.

## Exemple 15

Dans un réacteur de 3,5 litres en inox, muni d'une agitation magnétique et d'une régulation thermique par double enveloppe, on introduit à 30°C, dans l'ordre : 1,2 litres d'hydrogène, 2,4 litres de propylène liquide, 24 mM de triéthylaluminium et 2,4 mM de cyclohexyle méthyle diméthoxysilane.

Après un précontact de 10 minutes, 20 mg de la composante catalytique décrite dans l'exemple 12 sont injectés dans le réacteur. La température est portée rapidement à 70°C et maintenue pendant une heure à cette valeur.

A la fin de la réaction, le réacteur est refroidi et la pression abaissée à la pression atmosphérique. On récupère 960 grammes d'une poudre de masse volumique apparente de 0,32 (norme ASTM D 1895 méthode A), et d'un indice d'isotacticité, mesuré par extraction à l'heptane du polymère amorphe à l'aide d'un appareil Kumagawa, de 97,9 % en poids. Le melt-index mesuré suivant la norme ASTM D 1238 méthode 2 est de 3,8.

Le polymère présente les caractéristiques suivantes : diamètre moyen (d50) de 2240 $\mu$m, une largeur de distribution granulométrique (d90/d10) de 1,4 et un pourcentage de fines (< 500 $\mu$m) de 0 %.

## Exemple 16

On opère selon l'exemple 15 sauf que l'on introduit 20 mg de la composante catalytique décrite dans l'exemple 13. En fin de réaction on récupère 930 grammes d'une poudre de masse volumique apparente de 0,32 et d'un indice d'isotacticité de 98,4 % en poids. Le melt-index est de 3,3.

Le polymère présente les caractéristiques suivantes :diamètre moyen de 2230 $\mu$m, une largeur de distribution granulométrique de 1,4 et un pourcentage de fines (< 500 $\mu$m) de 0 %.

## Exemple 17

On opère selon l'exemple 15 sauf que l'on introduit 20 mg de la composante catalytique décrite dans l'exemple 14. En fin de réaction on récupère 956 grammes d'une poudre de masse volumique apparente de 0,32 et d'un indice d'isotacticité de 99,3 % en poids. Le melt-index est de 3,9.

Le polymère présente les caractéristiques suivantes : diamètre moyen de 2180 $\mu$m, une largeur de distribution granulométrique de 1,8 et un pourcentage de fines (< 500 $\mu$m) de 0 %

## Revendications

1. Particules poreuses de $MgCl_2$ se présentant, au microscope, sous la forme de polyèdres sensiblement réguliers possédant de 10 à 18 faces en nombre pair, dont les faces deux à deux symétriquement opposées sont sensiblement parallèles.

2. Particules selon la revendication 1 caractérisées en ce que leur structure se présente sous la forme de deux pyramides tronquées réunies dans leur plus grande base ou sous celle d'un prisme à pans coupés.

3. Particules selon l'une des revendications 1 ou 2 caractérisées en ce que la plus grande distance (D) opposant les deux points les plus éloignés l'un de l'autre de la particule est de 10 à 400 $\mu$m.

4. Particules selon l'une des revendications 1 à 3 caractérisées en ce que la plus grande hauteur (h) séparant les deux faces parallèles d'une particule les plus éloignées l'une de l'autre est comprise entre 0,6 et 0,8 (D) et la plus petite hauteur (e) séparant les deux faces parallèles de la même particule les plus rapprochées l'une de l'autre est comprise entre 0,1 et 0,8 (D) sachant que le rapport (h)/(e) est compris entre 1 et 8.

5. Particules selon l'une des revendications 1 à 4 caractérisées en ce qu'elles se présentent sous forme de macle.

6. Particules selon l'une des revendications 1 à 5 en ce que leur porosité est de 0,1 à 1 $cm^3$/g.

7. Particules selon l'une des revendications 1 à 6 caractérisées en ce que leur surface spécifique est de 0,5 à 15 $m^2$/g.

8. Particules de $MgCl_2$ selon l'une des revendications 1 à 7 caractérisées en ce que la taille moyenne des particules est de 50 à 200 $\mu$m avec une largeur de distribution granulométrique D90/D10 inférieure à 10.

9. Particules de $MgCl_2$ selon l'une des revendications 1 à 8 caractérisées en ce que le $MgCl_2$ se trouve sous la forme de complexe $MgCl_2$, nX dans lequel X est un solvant du $MgCl_2$ qui lui est complexé, "n" étant tel que la quantité en poids de solvant complexé au $MgCl_2$ permette de conserver au complexe sa forme cristalline.

10. Particules de $MgCl_2$ selon la revendication 9 caractérisée en ce que "n" est une valeur de 0 à 3.

11. Procédé de fabrication de particules poreuses d'une des revendications 1 à 10 comprenant une étape de mise en suspension dans au moins un solvant complexant de chlorure de magnésium, le rapport molaire solvant sur $MgCl_2$ étant inférieur au rapport de solubilité de ces deux corps à la température de la suspension caractérisé en ce que, en circuit fermé constitué d'un réacteur possédant un moyen d'agitation, d'une colonne de distillation, d'un moyen de refroidissement, est chauffé dans le réacteur le solvant complexant à température d'ébullition, les vapeurs condensées par le moyen de refroidissement retournant au réacteur après s'être enrichies en $MgCl_2$, par dissolution de $MgCl_2$ placé entre le moyen de refroidissement et le réacteur, suivi éventuellement d'une étape d'élimination de tout ou partie du solvant complexant.

12. Procédé de fabrication selon la revendication 11 caractérisé en ce que partant dans le réacteur de solvant seul, ce dernier est enrichi progressivement dans le réacteur en $MgCl_2$ jusqu'à l'apparition de particules se présentant sous la forme de polyèdres et en ce que l'enrichissement est poursuivi pour faire grossir les particules, toujours sous forme de polyèdres, jusqu'à la taille finale souhaitée.

13. Procédé selon l'une des revendications 11 ou 12 caractérisé en ce que dans une première étape les germes de $MgCl_2$ sous forme de polyèdres sont préparés en mettant en suspension du $MgCl_2$ dans un solvant complexant, le rapport molaire solvant sur $MgCl_2$ étant inférieur au rapport de solubilité de ces deux corps à la température de suspension et dans une deuxième étape il est procédé à la distillation du solvant en circuit fermé en présence, dans l'appareillage, du $MgCl_2$ placé entre le moyen de refroidissement et le réacteur.

14. Procédé selon l'une des revendications 11 à 13 caractérisé en ce que pour déterminer la taille moyenne finale des particules est utilisée la formule :

$$\text{grossissement} = \frac{D50 \text{ final}}{D_{50} \text{ initial}} = \left[\frac{m_1 + m_2}{m_1}\right]^{1/3}$$

D50 étant le diamètre en dessous duquel se trouvent 50 % en masse des particules, le terme "initial" correspondant aux particules initialement en suspension quand le milieu se présente sous forme biphasique avant enrichissement, $m_1$ étant la masse de $MgCl_2$ dans les particules présentes dans le milieu sursaturé initial et $m_2$ étant la masse de $MgCl_2$ apportée par la distillation du solvant complexant pour l'enrichissement du milieu et le grossissement des particules.

15. Composante catalytique essentiellement constituée de particules de $MgCl_2$ selon l'une des revendications 1 à 10 ou obtenues selon l'une des revendications 11 à 14 imprégnées d'un composé de métal de transition et plus particulièrement d'un composé halogéné de titane, et, éventuellement d'un donneur d'électrons et/ou éventuellement d'un acide de Lewis.

16. Procédé de polymérisation d'une ou plusieurs oléfines en $C_2$ à $C_{12}$ en présence d'un système catalytique constitué d'une composante catalytique

contenant du MgCl$_2$ et un composé de métal de transition, et, d'un cocatalyseur à base d'un composé organique d'aluminium caractérisé en ce que la composante catalytique est constituée selon la revendication 15.

17. Particule de polypropylène caractérisée en ce qu'elle présente une forme sensiblement homothétique de celle de la composante catalytique de la revendication 15.

18. Ensemble de particules comprenant des particules selon la revendication 17.

19. Ensemble de particules dont au moins 90 % en poids des particules sont selon la revendication 17.

20. Ensemble selon la revendication 19 dont au moins 99 % en poids des particules présentent une taille supérieure à 500 μm.

**Claims**

1. Porous particles of MgCl$_2$ which, seen under the microscope, are in the form of substantially regular polyhedra having an even number of from 10 to 18 faces, each two symmetrically opposite faces of which are substantially parallel.

2. Particles according to Claim 1, characterized in that their structure is in the form of two truncated pyramids joined by their largest base or in that of a prism having bevelled sides.

3. Particles according to either of Claims 1 and 2, characterized in that the greatest distance (D) opposing the two points furthest apart from one another in the particle is from 10 to 400 μm.

4. Particles according to one of Claims 1 to 3, characterized in that the greatest height (h) separating the two parallel faces of a particle which are furthest apart from one another is between 0.6 and 0.8 (D) and the smallest height (e) separating the two parallel faces of the same particle which are closest to one another is between 0.1 and 0.8 (D), on condition that the ratio (h)/(e) is between 1 and 8.

5. Particles according to one of Claims 1 to 4, characterized in that they are in the form of a twinned crystal.

6. Particles according to one of Claims 1 to 5, characterized in that their porosity is from 0.1 to 1 cm$^3$/g.

7. Particles according to one of Claims 1 to 6, characterized in that their specific surface area is from 0.5 to 15 m$^2$/g.

8. MgCl$_2$ particles according to one of Claims 1 to 7, characterized in that the average size of the particles is from 50 to 200 μm with a particle size distribution width $D_{90}/D_{10}$ of less than 10.

9. MgCl$_2$ particles according to one of Claims 1 to 8, characterized in that the MgCl$_2$ is in the form of a complex MgCl$_2$.nX, in which X is a solvent for MgCl$_2$ which is complexed thereto, "n" being such that the quantity by weight of solvent complexed to MgCl$_2$ enables the complex to retain its crystal form.

10. MgCl$_2$ particles according to Claim 9, characterized in that "n" is a value of from 0 to 3.

11. Process for the production of porous particles of one of Claims 1 to 10, comprising a step of suspending magnesium chloride in at least one complexing solvent, the molar ratio of solvent to MgCl$_2$ being lower than the solubility ratio of these two substances at the suspension temperature, characterized in that the complexing solvent is heated to boiling in a closed circuit comprising a reactor equipped with means for stirring, a distillation column and means for cooling, the vapour condensed by the means for cooling returning to the reactor after having been enriched in MgCl$_2$ by dissolution of MgCl$_2$ placed between the means for cooling and the reactor, optionally followed by a step of removing all or part of the complexing solvent.

12. Production process according to Claim 11, characterized in that, using solvent on its own as the starting material in the reactor, this solvent is progressively enriched in the reactor with MgCl$_2$ until particles in the form of polyhedra appear and in that the enrichment is continued to enlarge the particles, still in the form of polyhedra, to the desired final size.

13. Process according to either of Claims 11 and 12, characterized in that, in a first step, MgCl$_2$ seeds in the form of polyhedra are prepared by suspending MgCl$_2$ in a complexing solvent, the molar ratio of solvent to MgCl$_2$ being lower than the solubility ratio of these two substances at the suspension temperature, and, in a second step, the solvent is distilled in a closed circuit in the presence, in the apparatus, of MgCl$_2$ placed between the means for cooling and the reactor.

14. Process according to one of Claims 11 to 13, characterized in that the following equation is used to determine the final average size of the particles:

$$\text{enlargement} = \frac{\text{final } D_{50}}{\text{inital } D_{50}} = \left[\frac{m_1 + m_2}{m_1}\right]^{1/3}$$

$D_{50}$ being the diameter below which there is 50 % by mass of the particles, the term "initial" corresponding to the particles initially in suspension when the medium is in two-phase form before enrichment, $m_1$ being the mass of $MgCl_2$ in the particles present in the initial supersaturated medium, and $m_2$ being the mass of $MgCl_2$ supplied by the distillation of the complexing solvent in order to enrich the medium and to enlarge the particles.

15. Catalyst component essentially comprising $MgCl_2$ particles according to one of Claims 1 to 10 or obtained according to one of Claims 11 to 14, impregnated with a transition metal compound and more particularly with a halogen-containing titanium compound and, optionally, with an electron donor and/or, optionally, with a Lewis acid.

16. Process for the polymerization of one or more $C_2$ to $C_{12}$ olefins in the presence of a catalyst system comprising a catalyst component containing $MgCl_2$ and a transition metal compound and a cocatalyst based on an organoaluminium compound, characterized in that the catalyst component has the composition according to Claim 15.

17. Polypropylene particle characterized in that it has a form substantially homothetic with that of the catalyst component of Claim 15.

18. Collection of particles comprising particles according to Claim 17.

19. Collection of particles in which at least 90 % by weight of the particles are according to Claim 17.

20. Collection according to Claim 19 in which at least 99 % by weight of the particles have a size larger than 500 µm.

## Patentansprüche

1. Poröse Teilchen an $MgCl_2$, die sich im Mikroskop in Form annähernd regulärer Polyeder mit 10 bis 18 Flächen mit gerader Anzahl zeigen, von denen jeweils die sich zwei symmetrisch gegenüberliegenden Flächen etwa parallel sind.

2. Teilchen nach Anspruch 1, dadurch gekennzeichnet, daß sich ihre Struktur in Form zweier in ihrer größten Basis vereinigten Pyramidenstümpfe oder in Form eines Prismas mit abgestumpften Ecken zeigt.

3. Teilchen nach einem der Ansprüche 1 oder 2, dadurch gekennzeichnet, daß die größte Entfernung (D), die die zwei entferntesten Punkte des Teilchens voneinander trennt, 10 bis 400 µm beträgt.

4. Teilchen nach einem der Ansprüche 1 bis 3, dadurch gekennzeichnet, daß die größte Höhe (h), die die zwei entferntesten parallelen Flächen eines Teilchens voneinander trennt, zwischen 0,6 und 0,8 (D) beträgt und die kleinste Höhe (e), die die zwei nächsten parallelen Flächen desselben Teilchens voneinander trennt, zwischen 0,1 und 0,8 (D) beträgt, wobei das Verhältnis (h)/(e) zwischen 1 und 8 beträgt.

5. Teilchen nach einem der Ansprüche 1 bis 4, dadurch gekennzeichnet, daß sie in Form eines Zwillingskristalls vorliegen.

6. Teilchen nach einen, der Ansprüche 1 bis 5, dadurch gekennzeichnet, daß ihre Porosität 0,1 bis 1 $cm^3$/g beträgt.

7. Teilchen nach einem der Ansprüche 1 bis 6, dadurch gekennzeichnet, daß ihre spezifische Oberfläche 0,5 bis 15 $m^2$/g beträgt.

8. Teilchen von $MgCl_2$ nach einem der Ansprüche 1 bis 7, dadurch gekennzeichnet, daß die mittlere Teilchengröße 50 bis 200 µm mit einer granulometrischen Verteilungsbreite D90/D10 von kleiner 10 beträgt.

9. Teilchen von $MgCl_2$ nach einem der Ansprüche 1 bis 8, dadurch gekennzeichnet, daß das $MgCl_2$ in Form eines Komplexes $MgCl_2 \cdot nX$ vorliegt, bei dem X ein Lösemittel für das $MgCl_2$ ist, das es komplexiert, wobei „n" so ist, daß die Gewichtsmenge des das $MgCl_2$ komplexierenden Lösemittels dem Komplex die Bewahrung seiner kristallinen Form ermöglicht.

10. Teilchen von $MgCl_2$ nach Anspruch 9, dadurch gekennzeichnet, daß „n" einen Wert von 0 bis 3 darstellt.

11. Verfahren zur Herstellung von porösen Teilchen nach einem der Ansprüche 1 bis 10, das einen Suspendierungsschritt in mindestens einem Lösemittel umfaßt, das das Magnesiumchlorid komplexiert, wobei das Molverhältnis von Lösemittel zu $MgCl_2$ kleiner als das Löslichkeitsverhältnis dieser zwei Körper bei Suspensionstemperatur ist, dadurch gekennzeichnet, daß in einem geschlossenen Kreislauf, der aus einem Reaktor mit Rührvorrichtung, einer Destillationskolonne und einer Kühlvorrichtung besteht, in dem Reaktor das komplexierende Lösemittel bei Siedetemperatur erhitzt wird, wobei die mittels der Kühlvorrichtung kondensierten Dämpfe wieder in den Reaktor eintreten, nachdem sie sich durch Auflösen des zwischen der Kühlvorrichtung und dem Reaktor befindlichen $MgCl_2$ mit $MgCl_2$ eingereichert haben; diesem Schritt folgt gegebenenfalls ein Eliminierungsschritt des gesamten oder eines Teil des komplexierenden Lösemittels.

**12.** Verfahren zur Herstellung nach Anspruch 11, dadurch gekennzeichnet, daß durch Eintritt in den Reaktor des einzigen Lösemittels letzteres schrittweise in dem Reaktor mit $MgCl_2$ angereichert wird, bis die Teilchen, die in Form von Polyedern vorliegen, verschwinden, und daß die Anreicherung fortgeführt wird, um die Teilchen, immer noch in Form von Polyedern, bis zur gewünschten Endgröße wachsen zu lassen.

**13.** Verfahren nach einem der Ansprüche 11 oder 12, dadurch gekennzeichnet, daß in einem ersten Schritt die $MgCl_2$-Keime in Form von Polyedern hergestellt werden, indem man $MgCl_2$ in einem komplexierenden Lösemittel in Suspension bringt, wobei das Molverhältnis von Lösemittel zu $MgCl_2$ kleiner als das Löslichkeitsverhältnis dieser beiden Körper bei Suspensionstemperatur ist, und daß in einem zweiten Schritt die Destillation des Lösemittels in einem geschlossenen Kreislauf in Gegenwart von in der Apparatur befindlichem $MgCl_2$ durchgeführt wird, das sich zwischen der Kühlvorrichtung und dem Reaktor befindet.

**14.** Verfahren nach einem der Ansprüche 11 bis 13, dadurch gekennzeichnet, daß man zur Bestimmung der mittleren Teilchenendgröße folgende die Formel verwendet:

$$Wachstum = \frac{D50_{Ende}}{D50_{Beginn}} = \left[\frac{m_1 + m_2}{m_1}\right]^{1/3}$$

wobei D50 den Durchmesser bezeichnet, unterhalb dessen sich 50 Masse-% der Teilchen befindet, der Term „Beginn" den zu Beginn in Suspension befindlichen Teilchen entspricht, wenn das Milieu vor der Anreicherung in Zwei-Phasen-Form vorliegt, $m_1$ die Masse an $MgCl_2$ in den im übersättigten Anfangsmilieu vorhandenen Teilchen bezeichnet und $m_2$ die Masse an $MgCl_2$ darstellt, die durch Destillation des komplexierenden Lösemittels zur Anreicherung des Milieus und Wachstum der Teilchen erbracht wird.

**15.** Katalytischer Bestandteil, der im wesentlichen aus $MgCl_2$-Teilchen nach einem der Ansprüche 1 bis 10 besteht oder nach einem der Ansprüche 11 bis 14 erhalten wird, wobei die Teilchen mit einer Übergangsmetallverbindung, insbesondere mit einer halogenierten Titanverbindung, und gegebenenfalls mit einem Elektronendonor und/oder gegebenenfalls einer Lewis-Säure imprägniert sind.

**16.** Verfahren zur Polymerisation eines oder mehrerer $C_2$- bis $C_{12}$-Olefine in Gegenwart eines katalytischen Systems, das aus einem katalytischen $MgCl_2$-haltigen Bestandteil und einer Übergangsmetallverbindung und einem Cokatalysator auf Basis einer organischen Aluminiumverbindung besteht, dadurch gekennzeichnet, daß der katalytische Bestandteil nach Anspruch 15 zusammengesetzt ist.

**17.** Polypropylenteilchen, dadurch gekennzeichnet, daß es eine mit der Form des katalytischen Bestandteils aus Anspruch 15 etwa homothetische Form aufweist.

**18.** Gesamtheit von Teilchen, die Teilchen nach Anspruch 17 umfassen.

**19.** Gesamtheit von Teilchen, von denen mindestens 90 Gew.-% der Teilchen Teilchen nach Anspruch 17 sind.

**20.** Gesamtheit nach Anspruch 19, von denen mindestens 99 Gew.-% der Teilchen eine Größe oberhalb von 500 μm aufweisen.

FIGURE 1

FIGURE 2

PHOTO 1

PHOTO 2

PHOTO 3

PHOTO 4

PHOTO 5